# EUROPEAN PATENT APPLICATION

(11) **EP 4 549 754 A1**
(43) Date of publication of application: **07.05.2025**
(21) Application number: 23831126.0
(22) Date of filing: 15.06.2023
(51) Int. Cl.: F16B 5/00, F16B 15/00, F16B 15/06

(54) **RIVETING METHOD AND FASTENED PRODUCT**

(30) Priority: 01.07.2022 JP 2022106833
(71) Applicant: Nippon Light Metal Company, Ltd., Tokyo 105-0004 (JP); Shibaura Institute of Technology, Tokyo 135-8548 (JP)
(72) Inventor: HORI, Hisashi, Shizuoka-shi, Shizuoka 421-3203 (JP); HASHIMURA, Shinji, Tokyo 135-8548 (JP)
(74) Representative: Kiwit, Benedikt
(86) International application number: PCT/JP2023/022240
(87) International publication number: WO 2024/004678

(57) **Abstract**

The present invention includes: a preparation step in which a back surface (50a) of a second fastenable member (50) is overlaid on a front surface (40a) of a first fastenable member (40) that has a lower hole (41); and a riveting step in which a rivet (1a) that is made of metal and has been set in a location distanced from a front surface (50b) of the second fastenable member (50) is moved toward the location of the lower hole (41), and the rivet (1a) is driven, in order, through the second fastenable member (50) and the first fastenable member (40), and made to arrive in the the lower hole (41). The lower hole (41) comprises a hole section (43) that has an inner wall surface with a tapering substantially conical shape or substantially truncated conical shape, the rivet (1a) comprises a first shaft section (3) with a tapered shape, the first shaft section (3) has a tip end section (3a1) that becomes narrower in diameter toward the tip end side, a helical groove (3b) is carved into the peripheral surface of the first shaft section (3) from the base end side to the tip end side, and the maximum interference is 3-13%.

## Description

### TECHNICAL FIELD

The present invention relates to a riveting method and a fastened product.

### BACKGROUND ART

Bolt fastening is generally known as a method of mechanically fastening a lid made of an aluminum alloy to a casted object made of an aluminum alloy.

Moreover, there is known self-tapping fastening in which a to-be-fastened member is fastened while a thread groove is formed in the to-be-fastened member by using a self-tapping screw.

Meanwhile, a technique described in Patent Literature 1 is proposed as a riveting method in which a rivet in which a helical groove is carved is moved at high speed to fasten two members to each other. In the technique described in Patent Literature 1, first, a back surface of one metal plate is laid on a front surface of the other metal plate. Then, a metal rivet set at a position away from a front surface of the one metal plate is moved at high speed in a non-rotating state, and is made to be screwed into the one metal plate and the other metal plate in this order while being rotated. The used rivet includes a disc-shaped head portion and a shaft portion with a tapered shape provided in a center portion of the head portion. Moreover, a helical groove is carved on an outer peripheral surface of the shaft portion from the tip end side toward the base end side.

### CITATION LIST

### Patent Literature

Patent Literature 1: JP 2019-39535A

### SUMMARY OF INVENTION

### Technical Problem

However, assume a case where the to-be-fastened members are a plate member or the like and a material with a large thickness such as a block member or the like. In this case, if the to-be-fastened members in a state where a back surface of the plate member or the like is laid on a front surface of the block member or the like are attempted to be fastened to each other by driving a rivet from a front surface of the plate member or the like to the to-be-fastened members, there is a risk of occurrence cracking in the block member in driving of the rivet. If cracking occurs in the block member or the like, leak occurs from the to-be-fastened members.

In view of the above viewpoints, an object of the present invention is to provide a riveting method and a fastened product that suppress occurrence of cracking in to-be-fastened members and that have sufficient leak resistance.

### Solution to Problem

In order to solve such problems, a first invention is a riveting method including: a preparation step of laying a back surface of a second to-be-fastened member on a front surface of a first to-be-fastened member having a prepared hole; and a riveting step of moving a metal rivet set at a position away from a front surface of the second to-be-fastened member toward a position of the prepared hole, and driving the rivet into the second to-be-fastened member and the first to-be-fastened member in this order to cause the rivet to reach an inside of the prepared hole, the prepared hole includes a hole portion having an inner wall surface with a substantially cone shape or a substantially truncated cone shape that is a tapered shape, the rivet includes a first shaft portion with a tapered shape, the first shaft portion includes a tip end portion whose diameter decreases toward a tip end side, a groove is carved on an outer peripheral surface of the first shaft portion from a base end side toward the tip end side of the first shaft portion, and regarding an interference that is a value obtained by dividing a difference between a circumferential length of the inner wall surface of the hole portion and a circumferential length of the first shaft portion at a position where the inner wall surface and the first shaft portion are in contact with each other after driving of the rivet by the circumferential length of the inner wall surface, a maximum interference that is a maximum value of the interference is 3 to 13%.

A rivet contact length that is a length of a contact portion where the inner wall surface and the first shaft portion are in contact with each other in an axial direction of the first shaft portion is 5 mm or more.

It is preferable that the tip end portion includes a bulging portion that bulges outward beyond a cone shape defined by a bottom surface assumed to be at a base end of the tip end portion and a vertex at a tip end of the tip end portion, and the interference becomes the maximum interference in the bulging portion.

An opening diameter of the hole portion is preferably larger than a diameter of a base end portion of the first shaft portion.

A relationship between an opening diameter φ1 of the hole portion and a diameter φ2 of a base end portion of the first shaft portion is preferably 1.0×φ2<φ1≤1.1×φ2.

A taper angle of the hole portion is preferably 2 to 10°.

It is preferable that the rivet further includes a head portion extending from a base end of the first shaft portion, the first shaft portion extends downward from the head portion, the head portion includes a center portion connected to the first shaft portion and a peripheral edge portion spreading outward from the center portion, and a diameter of the peripheral edge portion is larger than a diameter of the first shaft portion.

The head portion preferably has an umbrella shape in which the peripheral edge portion spreads while being tilted toward the first shaft portion side.

A thickness of the peripheral edge portion of the head portion is preferably 0.1 to 2.0 mm.

A tilt angle of the head portion is preferably 5 to 30°.

It is preferable that the groove is a helical groove formed in a helical shape on an outer surface of the first shaft portion, and in the riveting step, the rivet set at the position away from the front surface of the second to-be-fastened member is moved toward the position of the prepared hole in a non-rotating state, and is made to reach the inside of the prepared hole by being screwed into the second to-be-fastened member and the first to-be-fastened member in this order while being rotated.

A helical angle of the helical groove is preferably 60 to 360°.

It is preferable that the rivet further includes a second shaft portion extending from the head portion, on the opposite side of the head portion to the first shaft portion, and in the riveting step, an auxiliary member having a holding portion configured to hold the second shaft portion is used, and the rivet is moved toward the position of the prepared hole together with the auxiliary member with the auxiliary member holding the second shaft portion.

The first to-be-fastened member and the second to-be-fastened member are preferably made of aluminum or an aluminum alloy.

Moreover, it is preferable that the first to-be-fastened member is made of aluminum or an aluminum alloy, and the second to-be-fastened member is a plate member made of a resin.

The first to-be-fastened member is preferably a casted member.

Moreover, a second invention is a fastened product including: a first to-be-fastened member having a prepared hole; a second to-be-fastened member whose back surface is laid on a front surface of the first to-be-fastened member; and a metal rivet driven into the second to-be-fastened member and the first to-be-fastened member in this order to reach an inside of the prepared hole, the prepared hole includes a hole portion having an inner wall surface with a substantially cone shape or a substantially truncated cone shape that is a tapered shape, the rivet includes a first shaft portion with a tapered shape, the first shaft portion includes a tip end portion whose diameter decreases toward a tip end side, a groove is carved on an outer peripheral surface of the first shaft portion from a base end side toward the tip end side of the first shaft portion, and regarding an interference that is a value obtained by dividing a difference between a circumferential length of the inner wall surface of the hole portion and a circumferential length of the first shaft portion at a position where the inner wall surface and the first shaft portion are in contact with each other after driving of the rivet by the circumferential length of the inner wall surface, a maximum interference that is a maximum value of the interference is 3 to 13%.

### Advantageous Effects of Invention

The riveting method and the fastened product according to the present invention can suppresses occurrence of cracking in to-be-fastened members and provide sufficient leak resistance.

### BRIEF DESCRIPTION OF DRAWINGS

[FIG. 1]

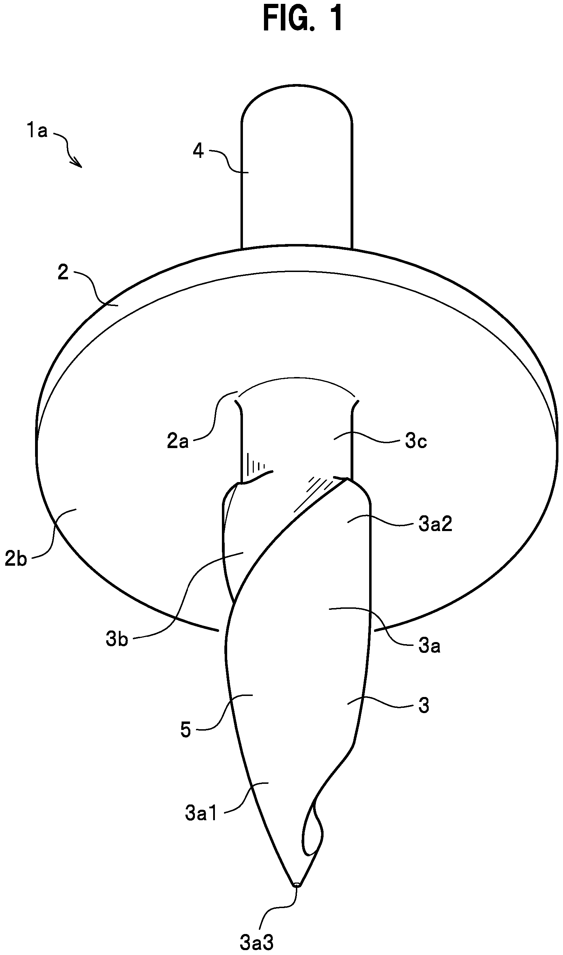

   FIG. 1 is an exterior perspective view of a rivet used in an embodiment of the present invention.
[FIG. 2]

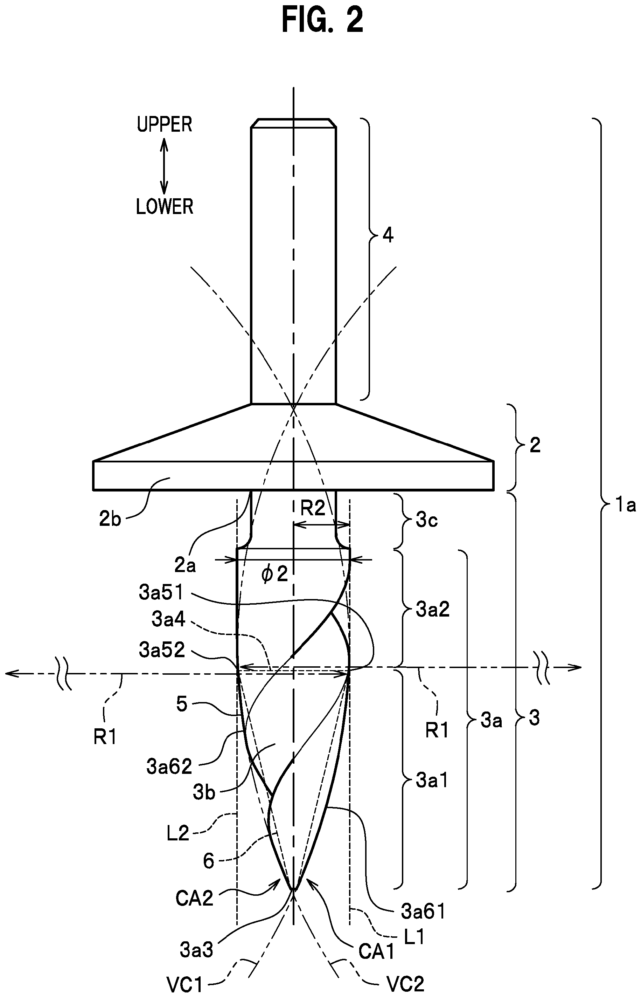

   FIG. 2 is a side view of the rivet used in the embodiment of the present invention.
[FIG. 3]

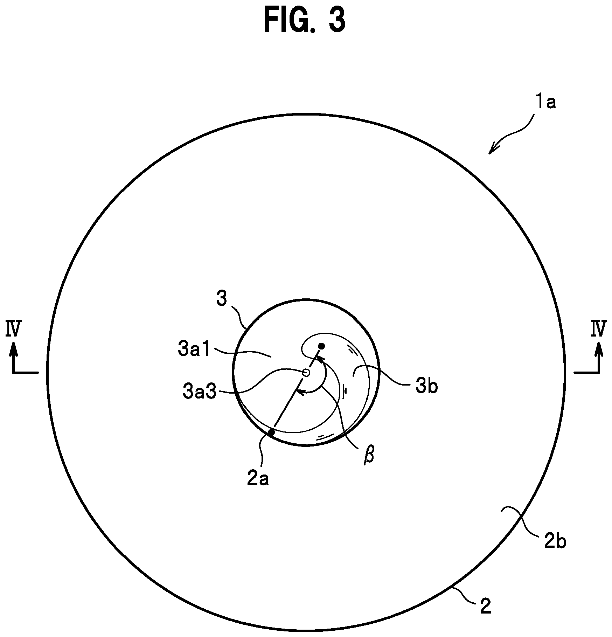

   FIG. 3 is a bottom view of the rivet used in the embodiment of the present invention.
[FIG. 4]

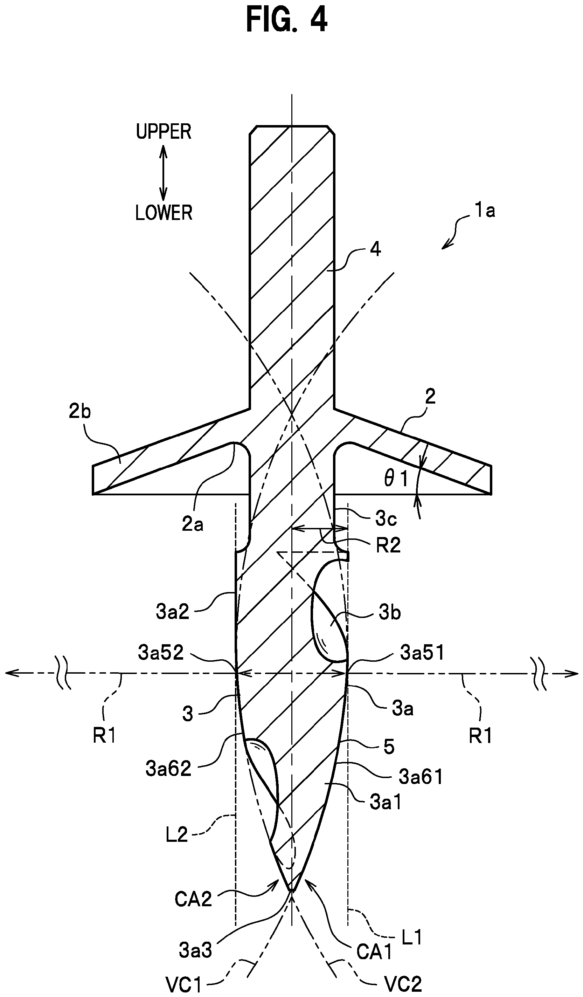

   FIG. 4 is a vertical cross-sectional view corresponding to IV-IV in FIG. 3.
[FIG. 5]

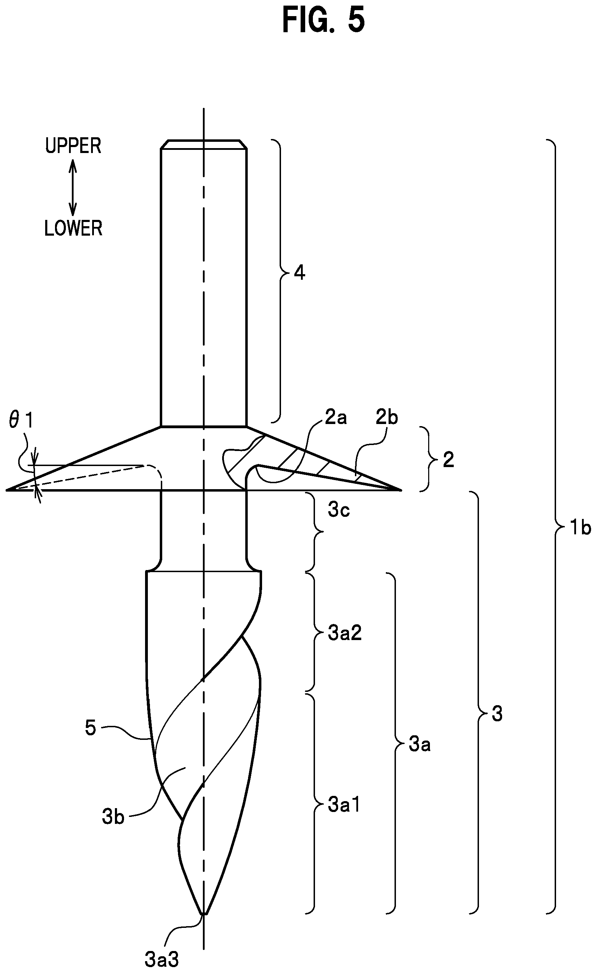

   FIG. 5 is a side view of a rivet of another form used in the embodiment of the present invention.
[FIG. 6]

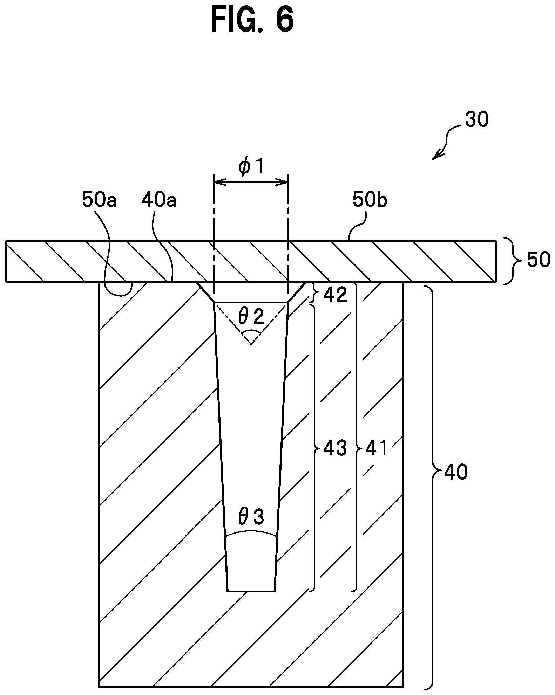

   FIG. 6 is a vertical cross-sectional view of to-be-fastened members used in the embodiment of the present invention.
[FIG. 7]

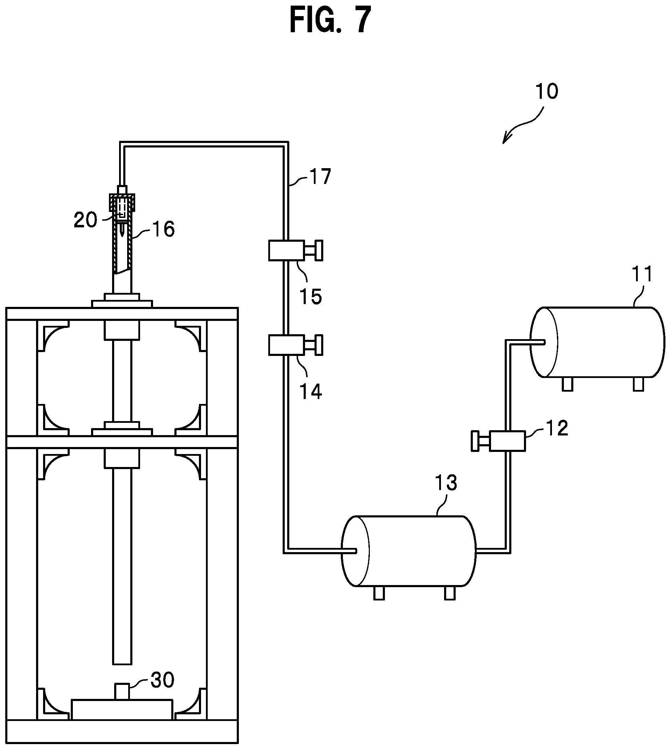

   FIG. 7 is a schematic configuration diagram of a riveting apparatus used in a riveting method according to the embodiment of the present invention.
[FIG. 8]

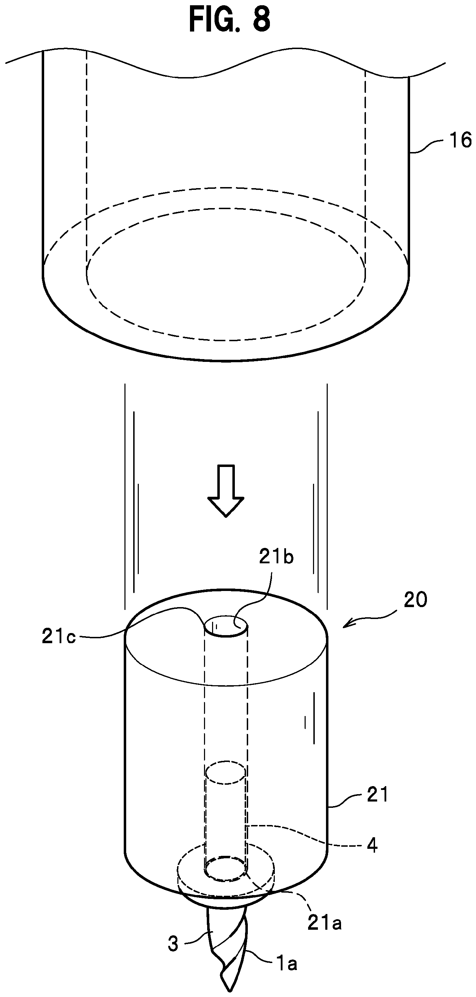

   FIG. 8 is a view showing a state where the rivet is ejected from the riveting apparatus.
[FIG. 9]

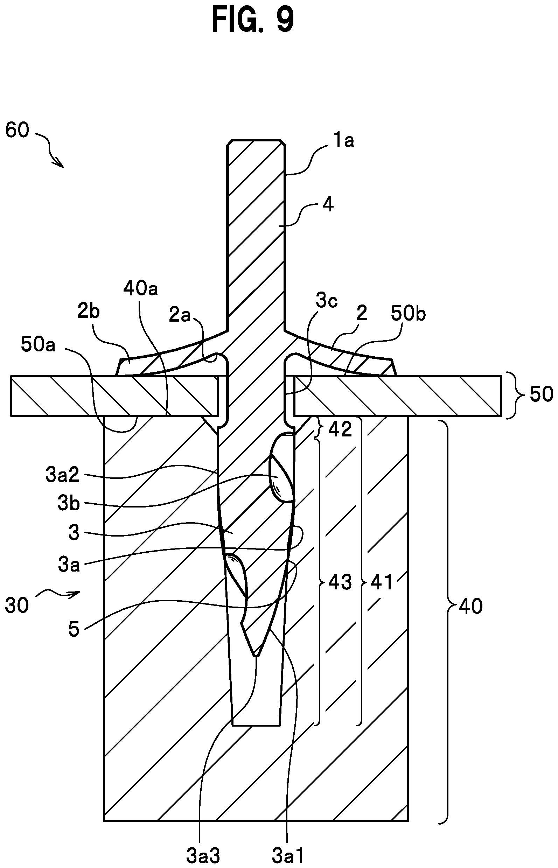

   FIG. 9 is a vertical cross-sectional view of a fastened product according to the embodiment of the present invention.
[FIG. 10A]

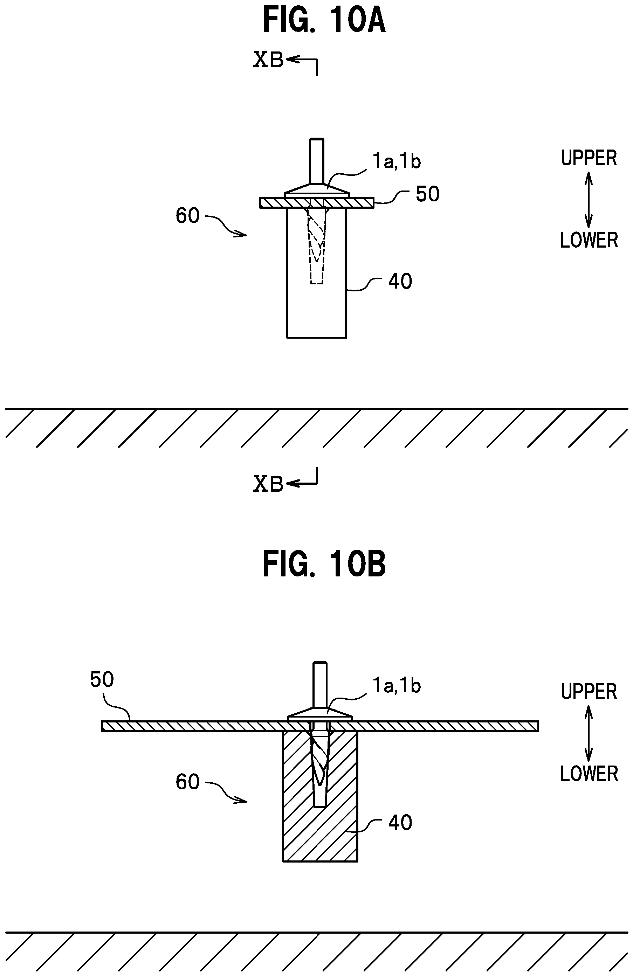

   FIG. 10A is a schematic diagram of a pull-out force measuring method in a test of examples.
[FIG. 10B]
   FIG. 10B is a vertical cross-sectional view corresponding to XB-XB in FIG. 10A.
[FIG. 11]

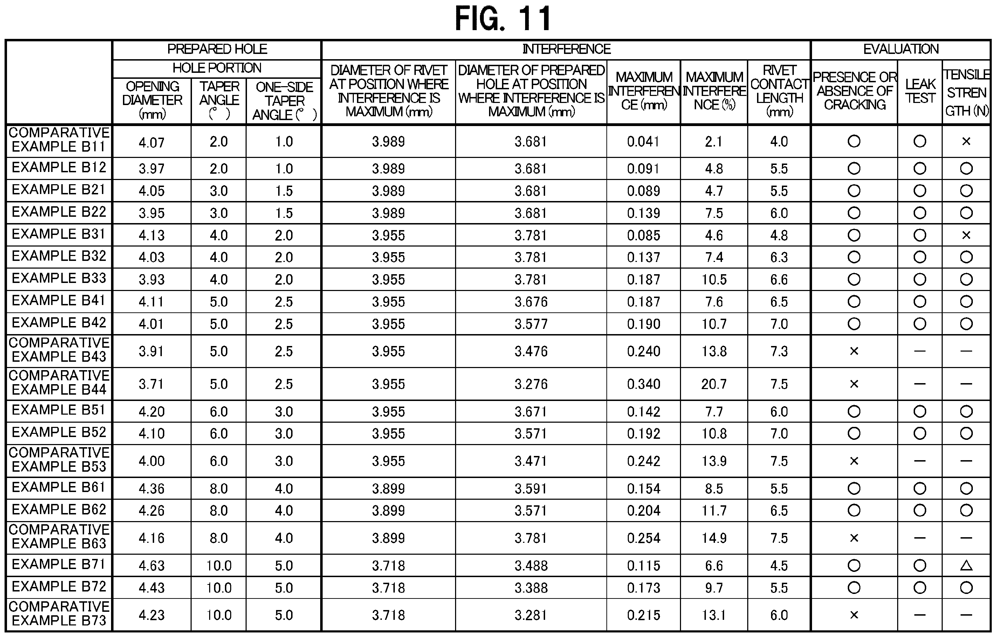

   FIG. 11 is a table showing experiment results of experiment data 1 of the present invention.
[FIG. 12]

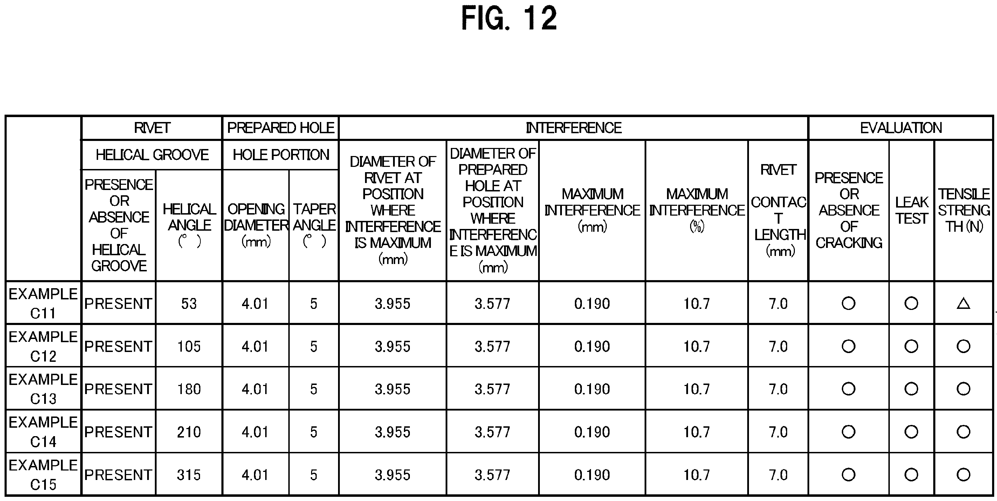

   FIG. 12 is a table showing experiment results of experiment data 2 of the present invention.
[FIG. 13]

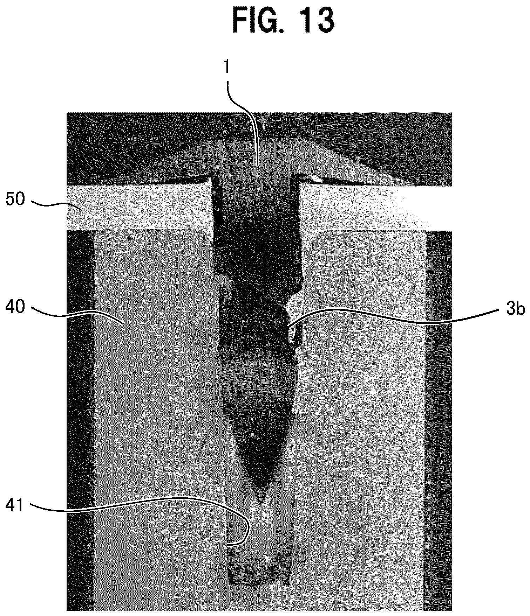

   FIG. 13 is a vertical cross-sectional view of a fastened product according to examples of the present invention.

### DESCRIPTION OF EMBODIMENTS

An embodiment of the present invention is explained with reference to the drawings as appropriate. The present invention is not limited only to the following embodiment. Moreover, all or some of components in the embodiment can be combined as appropriate. Furthermore, the drawings are used for conceptually explaining the present invention, and dimensions and ratios of the components shown in the drawings may vary from actual dimensions and ratios in some cases.

### [Regarding Configuration of Rivet]

A rivet used in the embodiment of the present invention is explained in detail with reference to the drawings.

A rivet 1a shown in FIGS. 1 to 4 is a member that is driven at high speed into two members, which are to be fastened to each other and which are laid one on top of the other, and that fastens these two members together. As shown in FIG. 1, the rivet 1a mainly includes a disc-shaped head portion 2, a first shaft portion 3 provided in a center portion of one side of the head portion 2, and a second shaft portion 4 provided in a center portion of the other side of the head portion 2. The rivet 1a is made of, for example, a metal, and may be made of various materials depending on the materials of the members to be fastened. An upper-lower direction in the following explanation is shown by the arrows in the drawings as appropriate. The upper-lower direction is defined for the sake of convenience of explanation, and does not limit the present invention. Moreover, "front surface" in the present description means a surface on the opposite side to a back surface. Although a case where two members are fastened to each other by using the rivet 1a is explained in this embodiment, the fastening target of the rivet 1a may be three or more members.

The first shaft portion 3 shown in FIG. 1 is a portion that penetrates the members to be fastened. The first shaft portion 3 includes a main body portion 3a extending downward from the head portion 2 and a neck portion 3c formed at a base end (connection portion with the head portion 2) of the first shaft portion 3. The main body portion 3a includes a base end portion 3a2 provided on the base end side and a tip end portion 3a1 provided on the tip end side. The main body portion 3a has a substantially cannon shell shape that is tapered. The base end portion 3a2 has a substantially cylindrical shape, and the diameter φ2 of the base end portion 3a2 is constant.

The tip end portion 3a1 is a portion that is continuous with the base end portion 3a2 and that is tapered toward the tip end (diameter decreases toward the tip end side). The tip end portion 3a1 includes a bulging portion 5 that bulges outward beyond a cone shape 6 (see FIG. 2) formed by a vertex at a tip end 3a3 and an imaginary bottom surface 3a4 (imaginary interface between the base end portion 3a2 and the tip end portion 3a1) assumed to be at a base end of the tip end portion 3a1. The bulging portion 5 is a portion configured to come into contact with an inner wall surface of a prepared hole 41 to be described later, and is a portion where the interference is the maximum interference. Although the tip end 3a3 is a flat surface in the present embodiment, the tip end portion 3a1 as a whole is sharpened toward the tip end 3a3, and this can reduce resistance in the case where the rivet 1a is driven into to-be-fastened members 30. Note that the tip end 3a3 may not be provided with the flat surface and have a sharp shape. The "interference" and the "maximum interference" are described later.

The shapes of the tip end portion 3a1 and the bulging portion 5 are explained with reference to FIGS. 2, 4, and 5. In a cross-sectional view of the main body portion 3a, one side surface portion 3a61 of the tip end portion 3a1 extends from an end 3a51 of one side surface of the base end portion 3a2 on the tip end portion 3a1 side toward the tip end 3a3 side. The diameter of the tip end portion 3a1 decreases as the side surface portion 3a61 extends toward the tip end 3a3 while drawing an arc CA1 that bulges outward while extending toward a center axis. Similarly, the other side surface portion 3a62 of the tip end portion 3a1 extends from an end 3a52 of the other side surface of the base end portion 3a2 on the tip end portion 3a1 side toward the tip end 3a3 side. The diameter of the tip end portion 3a1 decreases as the side surface portion 3a62 extends toward the tip end 3a3 while drawing an arc CA2 that bulges outward while extending toward the center axis. The side surface portions 3a61 and 3a62 of the tip end portion 3a1 extending, respectively, from the end portions 3a51 and 3a52 of the both side surfaces of the base end portion 3a2 merge at the tip end 3a3. The main body portion 3a is a structural body with an outer shape of a rotating body, obtained by rotating the tip end portion 3a1 and the base end portion 3a2, which have such cross-sectional structures.

More specifically, in the cross-sectional view, circles that touch imaginary straight lines L1 and L2, passing the respective side surfaces of the base end portion 3a2, at the ends 3a51 and 3a52 of the side surfaces of the base end portion 3a2 are referred to as imaginary circles VC1 and VC2, respectively. The arcs CA1 and CA2 forming the respective side surface portions 3a61 and 3a62 of the tip end portion 3a1 are part of the imaginary circles VC1 and VC2. The radius, that is the curvature radius R1 of the imaginary circles VC1 and VC2 can be used to express the size of the arcs CA1 and CA2 forming the side surface portions of the tip end portion 3a1. In the present embodiment, the curvature radius R1 of the arcs CA1 and CA2 forming the side surface portions of the tip end portion 3a1 and the bulging portion 5 is 22.27 mm, and the radius R2 of the base end portion 3a2 is 2 mm. In a relationship with the radius R2 of the base end portion 3a2, R1=R2×11.135.

The curvature radius R1 of the arcs CA1 and CA2 is preferably 14 mm or more, more preferably 18 mm or more, even more preferably 20 mm or more, and is preferably 40 mm or less, more preferably 30 mm or less, even more preferably 26 mm or less, particularly preferably 24 mm or less. The relationship between the curvature radius R1 of the arcs CA1 and CA2 forming the tip end portion 3a1 and the bulging portion 5 and the radius R2 of the base end portion 3a2 is preferably R2×5≤R1, more preferably R2×7≤R1, even more preferably, R2×9≤R1, particularly preferably R2×10≤R1. Moreover, the relationship between the curvature radius R1 and the radius R2 is preferably R1≤R2×20, more preferably R1≤R2×15, even more preferably R1≤R2×13, particularly preferably R1≤R2×12. In a relationship in which the curvature radius R1 is equal to or more than the lower limit described above, the length of the tip end portion 3a1 is sufficiently large, and securing of a rivet contact length between the inner wall surface of the prepared hole 41 and the first shaft portion 3 is facilitated. Moreover, in a relationship in which the curvature radius R1 is equal to or less than the upper limit described above, a bulging amount of the bulging portion 5 is sufficiently large, and securing of the maximum interference between the inner wall surface of the prepared hole 41 and the first shaft portion 3 is facilitated. Accordingly, causing the relationships between the curvature radius R1 and the radius R2 to satisfy the above-mentioned relationships can increase a pull-out resistance generated by the contact between the prepared hole 41 and the first shaft portion 3, and improve leak resistance.

A groove is carved on an outer peripheral surface of the first shaft portion 3 from the base end side to the tip end side of the first shaft portion 3. More specifically, the groove carved in the first shaft portion 3 is a helical groove 3b formed in a helical shape on an outer surface of the first shaft portion 3. The helical groove 3b is formed from the tip end portion 3a1 to the base end portion 3a2 of the main body portion 3a. As shown in FIG. 2, the neck portion 3c is formed to have a smaller diameter than the main body portion 3a. Note that no neck portion 3c may be provided in the first shaft portion 3. In this case, the helical groove 3b is preferably formed from the tip end to the base end of the first shaft portion 3. Moreover, the lengths (ratio of the lengths) of the tip end portion 3a1, the base end portion 3a2, and the neck portion 3c may be set as appropriate according to the shape of the prepared hole 41.

The head portion 2 is a member that prevents the rivet 1a from being buried into the members to be fastened in the case where the rivet 1a is driven into the members to be fastened and that suppresses leak. The shape and size of the head portion 2 are not limited to particular shape or size, and the head portion 2 only needs to receive energy (motion energy) generated depending on the drive speed of the rivet 1a by elastically deforming and receiving the energy. In this example, the head portion 2 extends from the base end of the first shaft portion 3. The head portion 2 includes a center portion 2a connected to the first shaft portion 3 and a peripheral edge portion 2b extending outward from the center portion 2a. The diameter of the peripheral edge portion 2b is larger than the diameter of the first shaft portion 3. Although the shape of the head portion 2 is not limited to a particular shape, in the present embodiment, the head portion 2 has an umbrella shape in which the peripheral edge portion 2b spreads while being tilted downward toward the first shaft portion 3 side. Although the head portion 2 has a circular shape in a plan view in the present embodiment, the head portion 2 may have an ellipsoid shape or a polygonal shape in the plan view.

When the helical groove 3b is traced from the base end to the tip end, the helical groove 3b is formed to turn right hand (clockwise) as viewed from above. Note that the helical groove 3b may be formed to turn left hand (counterclockwise) as viewed from above. In the case where the rivet 1a is driven into the members to be fastened, the helical groove 3b has a role of digging into the members to be fastened while causing the rivet 1a to rotate.

In the following explanation, an angle at which the helical groove 3b circles the first shaft portion 3 is expressed as "helical angle β" (FIG. 3). In the case of a helical angle 90°, the helical groove 3b circles the first shaft portion 3 a quarter of a turn, and in the case of a helical angle 720°, the helical groove 3b circles the first shaft portion 3 two turns. FIGS. 1 to 4 show the case of a helical angle 180°, and the helical groove 3b circles the first shaft portion 3 a half a turn. An appropriate value of the helical angle β of the helical groove 3b is described later.

The cross-sectional shape, width, and depth of the helical groove 3b can be set as appropriate within a scope in which the helical groove 3b can perform its role of digging into the members to be fastened. As shown in FIG. 4, the helical groove 3b in this example has a substantially arc shape in a cross-sectional view, and is tapered toward the tip end side (shape that becomes narrower and shallower toward the tip end side). Note that the helical groove 3b may be provided in part of the main body portion 3a. Moreover, multiple helical grooves 3b may be provided in the main body portion 3a.

The second shaft portion 4 extends from the center portion 2a of the head portion 2 in the opposite direction to the first shaft portion 3, and is a portion having, for example, a substantially cylindrical shape.

FIG. 5 shows a rivet 1b that is a modified example of the rivet 1a described above. The rivet 1b is different from the rivet 1a in the following point. The thickness of the peripheral edge portion 2b of the head portion 2 in the rivet 1a is substantially constant, while the thickness of the peripheral edge portion 2b in the rivet 1b has a tapered shape as shown in FIG. 5 in which part of the head portion 2 is cut away. Other configurations are the same as those of the rivet 1a described above, and detailed explanation is omitted by denoting the configurations in FIG. 5 with the same reference signs as those in FIGS. 1 to 4.

### [Regarding To-be-fastened Members]

The to-be-fastened members 30 shown in FIG. 6 are members to be fastened to each other by the rivet 1a or the rivet 1b described above. The to-be-fastened members 30 include a first to-be-fastened member 40 and a second to-be-fastened member 50. Specifically, the first to-be-fastened member 40 and the second to-be-fastened member 50 are fastened to each other by driving the rivet 1a or the rivet 1b therein. The first to-be-fastened member 40 and the second to-be-fastened member 50 are fastened to each other with the rivet 1a or the rivet 1b in a state where a back surface 50a of the second to-be-fastened member 50 is laid on a front surface 40a of the first to-be-fastened member 40 having the prepared hole 41.

In the present embodiment, the first to-be-fastened member 40 is a block material with a quadrilateral prism shape. The shape of the first to-be-fastened member 40 is not limited to a particular shape as long as the first to-be-fastened member 40 is a member that has a thickness large enough to provide at least the prepared hole 41 to be described later, and may be another shape. For example, the first to-be-fastened member 40 is a column-shaped member having a cross section with a circular, elliptical, polygonal, or indefinite shape. The length of the first to-be-fastened member 40 is preferably larger than the length of the first shaft portion 3 in a direction in which the rivet 1a or 1b is inserted. Moreover, the first to-be-fastened member 40 may be a member made to have a large thickness by laying two or more plate members one on top of another.

The prepared hole 41 includes an opening portion 42 opened on the front surface 40a of the first to-be-fastened member 40 and a hole portion 43 continuous with the opening portion 42. The hole portion 43 includes an inner wall surface with a substantially cone shape or a substantially truncated cone shape that is a tapered shape. The opening portion 42 is formed in a substantially cone shape whose inner wall surface forms a taper angle θ2 and whose diameter decreases from the front surface 40a side toward an inner portion of the first to-be-fastened member 40. The hole portion 43 is formed in a substantially cone shape or a substantially truncated cone shape whose inner wall surface forms a taper angle θ3 and whose diameter decreases from the front surface 40a side toward the inner portion of the first to-be-fastened member 40. The depth of the hole portion 43 is larger than the length of the first shaft portion 3 described above. The opening diameter φ1 of the hole portion 43 is larger than the diameter φ2 (FIG. 2) of the base end portion 3a2 of the first shaft portion 3. Note that the opening portion 42 does not have to be formed. In the case where no opening portion 42 is formed, the hole portion 43 is directly opened on the front surface 40a of the first to-be-fastened member 40. Moreover, the depth of the prepared hole 41 may be the same as the length of the first shaft portion 3 or smaller than the length of the first shaft portion 3. In the case where the depth of the prepared hole 41 is larger than the length of the first shaft portion 3, the rivet 1a can be smoothly inserted. In the case where the depth of the prepared hole 41 is smaller than the length of the first shaft portion 3, the tip end of the first shaft portion 3 is driven into a bottom portion of the prepared hole 41, and the joint strength increases. However, the depth and the length are preferably set to such depth and length that insertion is not hindered. The prepared hole 41 may be formed to be provided in formation of the first to-be-fastened member 40, or may be formed by performing tapered hole opening processing on the first to-be-fastened member 40 with a tool such as a drill, a reamer, or an end mill.

In the present embodiment, the second to-be-fastened member 50 is a plate member with a flat plate shape. The second to-be-fastened member 50 may have any shape or the like as long as the second to-be-fastened member 50 has such a thickness that at least the first shaft portion 3 can penetrate the second to-be-fastened member 50, and is, for example, a plate-shaped member that has a thickness smaller than the length of the first shaft portion 3. The material of the first to-be-fastened member 40 and the second to-be-fastened member 50 is not limited to a particular material, and is made of a metal that can be fastened with the rivet 1a (for example, aluminum, an aluminum alloy, magnesium, a magnesium alloy, copper, a copper alloy, titanium, a titanium alloy, or the like). The first to-be-fastened member 40 may be, for example, a casted member. In this case, it is desirable that the prepared hole 41 is also formed in a formation step of the first to-be-fastened member 40 by casting. The second to-be-fastened member 50 may be, for example, a plate member made of a metal or a resin. Note that the casted member is a material assumed to be obtained by putting a metal heated and melted to a liquid form referred to as molten metal into a die and cooling and solidifying the molten metal. Moreover, in this case, the casted member is preferably (a casted member made of) an Al-Si-Cu-based alloy, more preferably JISH5302 ADC12.

### [Regarding Riveting Method]

A riveting method using the rivet 1a or 1b according to the embodiment of the present invention is explained in detail with reference to the drawings. A riveting apparatus 10 shown in FIG. 7 is an apparatus that drives the rivet 1a (or rivet 1b (same applies hereinafter)) at high speed into the two members (to-be-fastened members 30) that are to be fastened to each other and that are laid one on top of the other, and fastens the to-be-fastened members 30 together.

As shown in FIG. 7, the riveting apparatus 10 includes an air compressor 11, a first needle valve 12, a pressure booster 13, a second needle valve 14, a solenoid valve 15, a rivet ejector 16, and hoses 17 connecting these configurations to one another.

The air compressor 11 is a device that compresses and sends out air. The first needle valve 12 is a valve for the pressure booster 13. The pressure booster 13 is a device that increases the pressure of the air sent out from the air compressor 11. The second needle valve 14 and the solenoid valve 15 are adjustment valves for sending the compressed air to the rivet ejector 16.

The riveting method of the present embodiment includes a preparation step of laying the back surface 50a of the second to-be-fastened member 50 on the front surface 40a of the first to-be-fastened member 40 having the prepared hole 41 (setting the second to-be-fastened member 50 and the first to-be-fastened member 40 to the state of FIG. 6) and a riveting step of moving the metal rivet 1a set at a position away from a front surface 50b (FIG. 6) of the second to-be-fastened member 50 toward a position of the prepared hole 41 by using the riveting apparatus 10 and driving the rivet 1a into the second to-be-fastened member 50 and the first to-be-fastened member 40 in this order to cause the rivet 1a to reach the inside of the prepared hole 41.

Specifically, the rivet ejector 16 has a long cylindrical shape in this example, and ejects a bullet 20 housed inside the rivet ejector 16 toward the to-be-fastened members 30 by using the pressure of the compressed air (air pressure). The bullet 20 only needs to be configured to include the rivet 1a, and may be only the rivet 1a. In this example, as shown in FIG. 8, an object in which an auxiliary member 21 is attached to the rivet 1a is used as the bullet 20. The auxiliary member 21 is a member for driving the rivet 1a into the to-be-fastened members 30 in a stable state. Moreover, the auxiliary member 21 is a member that increases motion energy of the rivet 1a ejected together with the auxiliary member 21. For example, in the case where the rivet 1a is light weight, the auxiliary member 21 is used for weight adjustment.

The material, shape, and mass of the auxiliary member 21 may be any material, shape, and mass as long as the rivet 1a is driven into the to-be-fastened members 30 in the stable state, and can be set as appropriate. As shown in FIG. 8, the auxiliary member 21 in this example has a cylindrical shape in which an inner peripheral surface 21b with a substantially circular column shape is formed, and the second shaft portion 4 is inserted into the inner peripheral surface 21b from one opening portion 21a to fix the rivet 1a to the auxiliary member 21. Specifically, the inner peripheral surface 21b holds the second shaft portion 4 as a holding portion. The compressed air is taken in from the other opening portion 21c, and the bullet 20 is ejected from the rivet ejector 16 at high speed by using the pressure of the taken-in air. Note that the bullet 20 in the rivet ejector 16 is arranged such that the center axis of the first shaft portion 3 of the rivet 1a attached to the bullet 20 is aligned in advance with the center axis of the prepared hole 41 of the to-be-fastened members 30 located below the first shaft portion 3. Moreover, the rivet 1a may be fixed to the auxiliary member 21 in a form in which the rivet 1a is provided with no second shaft portion 4.

The bullet 20 ejected from the rivet ejector 16 moves in air at high speed in a non-rotating state, and reaches the to-be-fastened members 30. The rivet 1a having reached the to-be-fastened members 30 is driven into the to-be-fastened members 30 while being rotated and screwed-in by the helical groove 3b carved in the first shaft portion 3 (see FIG. 1). Then, the entire first shaft portion 3 is inserted into the to-be-fastened members 30, the head portion 2 (see FIG. 1) comes into contact with the to-be-fastened members 30, and the riveting is thereby completed. The to-be-fastened members 30 including the two members are thereby fastened together. As a result, the to-be-fastened members 30 are fastened to each other with the rivet 1a, and become a fastened product 60 as shown in the cross-sectional diagram of FIG. 9.

### [Regarding Numerical Ranges]

Next, explanation is given of numerical ranges of the portions preferable for the riveting method according to the present embodiment.

First, a value obtained by dividing a difference between a circumferential length of the inner wall surface of the hole portion 43 before the driving of the rivet 1a and a circumferential length of the first shaft portion 3 at a position where the inner wall surface and the first shaft portion 3 are in contact with each other after the driving of the rivet 1a by a circumferential length of the inner wall surface before the driving of the rivet 1a is referred to as "interreference". The "maximum interference (%)" is an interference at a position where the interference takes the maximum value in a portion where the inner wall surface of the hole portion 43 and the first shaft portion 3 are in contact with each other.

In the present embodiment, the "maximum interference (%)" is normally 3 to 13%, preferably 4 to 12%, more preferably 5 to 10%, even more preferably 6 to 8%.

Moreover, "rivet 1a contact length (mm)" is the length of the portion where the rivet 1a is in contact with the inner wall surface of the hole portion 43 in an axial direction. In the present embodiment, the "rivet 1a contact length (mm)" is preferably 5 mm or more, more preferably 6 mm or more, even more preferably 7 mm or more.

Furthermore, the "rivet 1a contact length (mm)" is preferably 125% or more of the diameter φ2 of the base portion (base end portion 3a2) of the tip end portion 3a1, more preferably 150% or more of the diameter φ2, preferably 175% or more of the diameter φ2.

Moreover, a relationship between the opening diameter φ1 (FIG. 6) that is the diameter of an entrance portion of the hole portion 43 in the prepared hole 41 and the diameter φ2 (FIG. 2) of the base end portion 3a2 of the main body portion 3a is preferably 1.0×φ2<φ1≤1.1×φ2, more preferably 1.01 ×φ2<φ1≤1.09×φ2, even more preferably 1.02×φ2<φ1≤1.08×φ2.

Furthermore, the taper angle θ3 (FIG. 6) that is a tilt of the inner wall surface of the hole portion 43 in the prepared hole 41 is preferably 2 to 10°, more preferably 3 to 9°, even more preferably 4 to 8°.

Moreover, the thickness of the peripheral edge portion 2b of the head portion 2 in the rivet 1a or the rivet 1b (see FIGS. 4 and 5. A portion with the largest thickness for the rivet 1b) is preferably 0.2 to 2.0 mm, more preferably 0.3 to 1.8 mm, even more preferably 0.5 to 1.5 mm.

Furthermore, as shown in FIG. 4, a tilt angle θ1 of the head portion 2 in the rivet 1a is angle between an imaginary plane perpendicular to the axis center of the rivet 1a and a lower surface of the peripheral edge portion 2b. Moreover, as shown in FIG. 5, the tilt angle θ1 of the head portion 2 in the rivet 1b is an angle between an imaginary plane perpendicular to the axis center of the rivet 1b and a lower surface of the peripheral edge portion 2b. In the case where the tilt angles of an upper surface and the lower surface of the peripheral edge portion 2b vary from each other as in the rivet 1b, the tilt angle of the lower surface is adopted. This is because the lower surface side is assumed to contribute to the leak resistance. The tilt angle θ1 is preferably 5 to 30°, more preferably 10 to 25°, even more preferably 15 to 20°.

Moreover, the helical angle β (see FIG. 3. As described above) is preferably 60° or more, more preferably 120° or more, even more preferably 180° or more, particularly preferably 240° or more. Furthermore, the helical angle β is preferably 360° or less, more preferably 330° or less, even more preferably 300° or less. In the case where the helical angle β is equal to or larger than the lower limit value described above, tensile strength exhibited by entering of the first to-be-fastened member 40 and the second to-be-fastened member 50 into the helical groove 3b of the rivet 1a, 1b and meshing of the first to-be-fastened member 40 and the second to-be-fastened member 50 with the helical groove 3b tends to be improved. Moreover, in the case where the helical angle β is equal to or less than the upper limit value described above, the rivet 1a or 1b tends to be driven into the first to-be-fastened member 40 and the second to-be-fastened member 50 while being smoothly rotated by being affected by the helical groove 3b in the driving of the rivet 1a or 1b.

### [Regarding Operations and Effects]

Operations and effects of the embodiment explained above are explained.

A method of fastening two plate members by using a rivet with a helical groove has been conventionally known (Patent Literature 1 described above). However, in the case where to-be-fastened members are a plate member or the like and a block member or the like, cracking occurs in the block member or the like in driving of the rivet in some cases, and fastening is thus difficult.

A prepared hole has been conventionally provided in the to-be-fastened member in screwing of a tapping screw. In the case of the tapping screw, the prepared hole diameter can be set to a diameter between the major diameter and the minor diameter of a male thread in consideration of the diameter of the male thread and a percentage of thread engagement. Then, screwing the tapping screw into the prepared hole causes a thread to cut the prepared hole and form a female thread, and the fastening can be performed by actions of the male thread and the female thread.

However, in the case of self-tapping fastening, high accuracy is required for the shape of a prepared hole provided in an aluminum alloy casted object. Moreover, the conventional method has such a problem that the life of a die is generally short.

Meanwhile, in the case of a conventional rivet with no helical groove, inserting the rivet into a prepared hole provided in a to-be-fastened member causes the to-be-fastened member around the prepared hole to deform, and resilience generated with the deformation fastens the rivet, thereby generating fastening force. In this case, if the size of the prepared hole is the same or larger than the rivet, no or little deformation occurs in the to-be-fastened member, and this leads to insufficient joint strength. Meanwhile, in the case where the prepared hole is excessively smaller than the rivet, the deformation in the to-be-fastened member around the prepared hole is large, and this causes cracking in the to-be-fastened member. Particularly, in the case where the to-be-fastened member is a material with a low stretch property such as an aluminum die-cast of ADC 12 or the like, cracking is likely to occur in the fastened product when the deformation amount exceeds a certain level.

Meanwhile, in the present embodiment, the prepared hole 41 includes the hole portion 43 having the inner wall surface with the substantially cone shape or the substantially truncated cone shape that is a tapered shape. Moreover, the rivet 1a or 1b includes the first shaft portion 3 with the tapered shape, and regarding the interference that is the value obtained by dividing the difference between the circumferential length of the inner wall surface of the hole portion 43 and the circumferential length of the first shaft portion 3 at the position where the inner wall surface and the first shaft portion 3 are in contact with each other by the circumferential length of the inner wall surface, the maximum interference that is the maximum value of the interference is 3 to 13%.

Thus, according to the present embodiment, contact of the tip end portion 3a1, whose diameter decreases toward the tip end side, with the inner wall surface of the hole portion 43 formed in the tapered shape can cause the to-be-fastened members 30 to deform and enables fastening with the rivet 1a or 1b. Moreover, in the case where the maximum interference is 13% or less, excessive deformation of the second to-be-fastened member 50 around the prepared hole 41 is suppressed, and this can suppress occurrence of cracking in the to-be-fastened members 30. Moreover, in the case where the maximum interference is 3% or more, an interference large enough to cause appropriate deformation of the second to-be-fastened member 50 around the prepared hole 41 can be secured, and the fastening force generated with the deformation of the second to-be-fastened member 50 is more likely to be exhibited. Thus, according to the present embodiment, it is possible to provide the riveting method and the fastened product 60 that can prevent occurrence of cracking and that have sufficient leak resistance.

Moreover, providing the groove in the first shaft portion 3 can cause the groove to cut the material of the first to-be-fastened member 40 in the driving of the rivet 1a or 1b. In a case of a screw, provision of a thread increases the circumferential length of the screw depending on the height of the thread. In the present embodiment, the circumferential length of the first shaft portion 3 does not change even in the case where the groove is provided on the outer peripheral surface of the first shaft portion 3. Accordingly, deformation of the first to-be-fastened member 40 to a periphery that occurs in the driving of the rivet 1a or 1b can be suppressed. Moreover, part of the material cut by the driving of the rivet 1a or 1b is taken into the groove, and this can reduce stress generated with the deformation of the first to-be-fastened member 40. Accordingly, it is possible to insert the rivet 1a or 1b into the prepared hole 41 and fasten the to-be-fastened members 30 to each other while suppressing occurrence of cracking in the to-be-fastened members 30. Moreover, accuracy as high as that for the case of the self-tapping fastening using the self-tapping screw is not required for the shape of the prepared hole 41 provided in the aluminum alloy casted object, and the case where the die for the to-be-fastened members 30 has a short life can be suppressed.

Moreover, the rivet contact length that is the length of the contact portion where the inner wall surface of the prepared hole 41 and the first shaft portion 3 are in contact with each other in the axial direction of the first shaft portion 3 is 5 mm or more. This can improve the tensile strength of the fastened product 60.

For example, in the case where a screw or a nail that includes a column shaped shaft portion and a tip end portion with a sharp shape on the tip end side of the shaft portion is driven into a prepared hole with a tapered shape, the interference is assumed to be maximum at a portion on the tip end side of the shaft portion of the screw or the nail that is in contact with the base end side of the tip end portion. Specifically, in the case of the screw or the nail, it is assumed that the interference is maximum on the tip end side of the shaft portion with the column shape, and the interference is not maximum at the sharp tip end portion. Moreover, in the case of the screw or the nail, stress generated with the driving of the screw or the nail is assumed to be concentrated in a portion where the tip end side of the shaft portion with the column shape comes into contact with the prepared hole. Meanwhile, in the present embodiment, the interference of the bulging portion 5 provided in the tip end portion 3a1 of the first shaft portion 3 is the maximum interference. In other words, the maximum interference is achieved near the center of the first shaft portion 3 in the axial direction, and not at the tip end or the base end of the first shaft portion 3. Moreover, the interference is maximum in the tip end portion 3a1 including the bulging portion 5, and not in the base end portion 3a2. This allows the rivet 1a or 1b to come into contact with the inner wall surface of the prepared hole 41 in a relatively large range in the bulging portion 5 with the bulging shape. Accordingly, stress generated with the driving of the rivet 1a or 1b is distributed, and occurrence of the cracking in the first to-be-fastened member 40 is more likely to be suppressed. Moreover, causing the rivet 1a or 1b to come into contact with the inner wall surface of the prepared hole 41 in the bulging portion 5 can increase the pull-out resistance between the first shaft portion 3 and the hole portion 43. Accordingly, more sufficient leak resistance can be provided.

The opening diameter φ1 of the hole portion 43 of the prepared hole 41 is larger than the diameter φ2 of the base end portion 3a2 of the first shaft portion 3. This suppresses an increase of load between the opening portion 42 of the prepared hole 41 and the first shaft portion 3 of the rivet 1a or 1b in the driving of the rivet 1a or 1b, and the first shaft portion 3 can be smoothly inserted into the prepared hole 41.

Moreover, the relationship between the opening diameter φ1 of the hole portion 43 and the diameter φ2 of the base end portion 3a2 of the first shaft portion 3 is preferably 1.0×φ2<φ1≤1.1×φ2. According to such a method, the maximum interference is preferably determined, and this can further suppress occurrence of cracking in the to-be-fastened members 30, and provide more sufficient leak resistance.

Furthermore, the taper angle θ3 of the hole portion 43 is preferably 2 to 10°. According to such a method, the maximum interference is preferably determined, and this can further suppress occurrence of cracking in the to-be-fastened members 30, and provide more sufficient leak resistance.

Moreover, the rivet 1a or 1b further includes the head portion 2 including the center portion 2a and the peripheral edge portion 2b, and the diameter of the peripheral edge portion 2b of the head portion 2 is larger than the diameter of the first shaft portion 3. The head portion 2 thereby elastically deforms and comes into tight contact with the surface of the to-be-fastened members 30, and this can further improve the leak resistance of the fastened product 60. Specifically, the head portion 2 is a portion where the rivet 1a or 1b strongly comes into tight contact with the surface of the to-be-fastened members 30 in the case where the rivet 1a or 1b is driven into the to-be-fastened members 30. The head portion 2 elastically deforms by receiving energy (motion energy) generated by the driving of the rivet 1a or 1b, and is held by strongly coming into tight contact with the surface of the to-be-fastened members 30, and this supports airtightness. Moreover, since the rivet 1a or 1b is fastened to the to-be-fastened members 30, the head portion 2 is held while being elastically deformed. Moreover, the peripheral edge portion 2b of the head portion 2 also functions as a stopper in the driving of the rivet 1a or 1b, and can absorb motion energy.

Furthermore, since the head portion 2 has the umbrella shape in which the peripheral edge portion 2b spreads while being tilted toward the first shaft portion 3 side, the leak resistance of the fastened product 60 can be further improved.

Moreover, since the thickness of the peripheral edge portion 2b of the head portion 2 is in the numerical range of 0.1 to 2.0 mm, the leak resistance of the fastened product 60 can be further improved.

Furthermore, since the tilt angle θ1 of the head portion 2 is in the numerical range of 5 to 30°, the leak resistance of the fastened product 60 can be further improved.

Moreover, the groove carved in the first shaft portion 3 is the helical groove 3b formed in the helical shape on the outer surface of the first shaft portion 3, and in the riveting step, the rivet 1a or 1b set at the position away from the front surface 50b of the second to-be-fastened member 50 is moved toward the position of the prepared hole 41 a non-rotating state, and is made to reach the inside of the prepared hole 41 by being rotated and screwed into the second to-be-fastened member 50 and the first to-be-fastened member 40 in this order. Accordingly, the helical groove 3b can be made to cut the surface material of the to-be-fastened members 30 and fill the prepared hole 41 by the rotation of the rivet 1a or 1b. Moreover, the helical groove 3b can hold therein the material of the first to-be-fastened member 40 and the second to-be-fastened member 50 cut by the helical groove 3b, and suppress entrance of extra material into a space between the rivet 1a or 1b and the prepared hole 41. Accordingly, deformation due to bulging of the first to-be-fastened member 40 that occurs depending on the volume of the rivet 1a or 1b interfering with the first to-be-fastened member 40 and the second to-be-fastened member 50 with the driving of the rivet 1a or 1b is suppressed, and cracking in the first to-be-fastened member 40 is more likely to be suppressed. In the case where the first to-be-fastened member 40 is an aluminum alloy casted object with a low stretch property, suppression of cracking by the helical groove 3b is further effective.

Moreover, in the riveting step, the auxiliary member 21 including the holding portion (inner peripheral surface 21b) configured to hold the second shaft portion 4 is used, and the rivet 1a or 1b is moved toward the position of the prepared hole 41 together with the auxiliary member 21 in the state where the second shaft portion 4 is held by the auxiliary member 21. Accordingly, increasing the weight of the rivet 1a or 1b with the auxiliary member 21 can increase motion energy in the driving of the rivet 1a or 1b. Thus, the rivet 1a or 1b can be more efficiently driven by using the auxiliary member 21.

Moreover, in the case where the first to-be-fastened member 40 is a casted member, the prepared hole 41 can be formed in advance in the casting stage. Accordingly, it is possible to omit the step of forming the prepared hole 41 in the first to-be-fastened member 40 by drilling and improve productivity.

### <Others>

Although the embodiment of the present invention has been described above, appropriate design changes can be made within a scope not contradicting with the spirit of the present invention.

Although the rivet 1a or 1b is ejected toward the to-be-fastened members 30 by using air pressure in the present embodiment, the rivet 1a or 1b may be driven into the to-be-fastened members 30 by using other methods. For example, pressure may be applied to the rivet 1a or 1b by using a substance other than air, or the rivet 1a or 1b may be driven into the to-be-fastened members 30 by a mechanical action (for example, reciprocating motion of a piston).

### Examples

Next, examples of the present invention are explained. In the present example, tests of experiment data 1 and experiment data 2 were preformed to grasp the characteristics of the rivet 1a according to the present invention.

In the experiment data 1 and the experiment data 2, for each of multiple examples and multiple comparative examples corresponding to the examples, the rivet 1a was driven into the to-be-fastened members 30 under various conditions by using the riveting apparatus 10 described above to create the fastened product 60 (FIG. 9) in which the to-be-fastened members 30 were fastened together by the rivet 1a, and various evaluations were performed for the fastened product 60 (FIGS. 11 to 12).

### [Evaluation]

### <Presence or Absence of Cracking>

Presence or Absence of cracking in the fastened product 60 was visually checked. A case where cracking occurred in the fastened product 60 was evaluated as "×" to indicate "not good", and a case where no cracking occurred was evaluated as "∘" to indicate "good".

### <Leak Test>

A resin jig was arranged on the front surface 50b side of the second to-be-fastened member 50 in the fastened product 60 to cover the entire head portion 2 and the second shaft portion 4. After the arrangement of the resin jig, pressure was applied to the resin jig toward the second to-be-fastened member 50 to set the resin jig and the fastened product 60 to a state where no air leaks from a gap between the resin jig and the second to-be-fastened member 50, and a test sample was thus prepared. Air was blown into the resin jig from the front surface 50b side at a pressure of 0.3 MPa with the test sample submerged in water to perform pressurization. Generation of air bubbles from a joining surface of the first to-be-fastened member 40 and the second to-be-fastened member 50 was checked to evaluate presence or absence of leak. A case where no air bubbles were generated for one minute was evaluated as "good", a case where the numbers of air bubbles generated in one minute was five or less was evaluated as "acceptable", and a case where the number of air bubbles generated in one minute was six or more was evaluated as "not acceptable". The leak test was performed for three fastened products 60, and a case where all three fastened products 60 were good was evaluated as "∘" to indicate "good", a case where at least one of the three fastened products 60 was good but the others were acceptable or not acceptable was evaluated as "△" to indicate "conditional", and a case where all three fastened products 60 were acceptable or not acceptable was evaluated as "×" to indicate "not good".

### <Tensile Strength>

As shown in FIGS. 10A and 10B, the first to-be-fastened member 40 in the fastened product 60 was arranged on the lower side while the second to-be-fastened member 50 was arranged on the upper side, and the lower end side of the second to-be-fastened member 50 was fixed with a predetermined jig (illustration omitted). In this state, force pulling the first to-be-fastened member 40 upward was applied to both ends of the first to-be-fastened member 40 by using a tensile tester (manufactured by Shimadzu Corporation, Autograph, AG-50kNX) to perform a pull-out test. Cross head speed of the tensile tester was set to 3 mm/min. In the pull-out test, load up to a point where the rivet 1a and the second to-be-fastened member 50 were pulled out from the first to-be-fastened member 40 was measured, and a numerical value indicating the maximum load was used as tensile strength of the fastened product 60. As a result, a case where the tensile strength of the fastened product 60 exceeded 2,500 N was evaluated as "∘" to indicate "good", a case where the tensile strength was 2,000 to 2,500 N was evaluated as "△" to indicate "conditional", and a case where the tensile strength was less than 2,000 N was evaluated as "×" to indicate "not good".

Note that cases where evaluations of the leak test and the pull-out test were not performed are described as "-" in the corresponding fields.

### [Experiment Data 1]

In the experiment data 1, as explained with reference to FIG. 6, the back surface 50a of the plate-shaped second to-be-fastened member 50 was laid on the front surface 40a of the quadrilateral-prism-shaped first to-be-fastened member 40 having the prepared hole 41. In this state, as explained with reference to FIGS. 7 and 8, the rivet 1a attached to the auxiliary member 21 was driven into the second to-be-fastened member 50 and the first to-be-fastened member 40 in this order by using the riveting apparatus 10, and was made to reach the inside of the prepared hole 41. The fastened product 60 in which the first to-be-fastened member 40 and the second to-be-fastened member 50 are fastened to each other with the rivet 1a was thereby obtained.

In each of the examples and the comparative examples in the experiment data 1, the rivet 1a explained with reference to FIGS. 1 to 4 was used. In the rivet 1a, the length of the tip end portion 3a1 of the main body portion 3a was 9 mm, and the diameter φ2 of the base portion of the tip end portion 3a1 was 4 mm. Moreover, the curvature radius R1 of the arc forming the tip end portion 3a1 and the bulging portion 5 of the first shaft portion 3 in the side cross-sectional view was 22.5 (mm). Furthermore, the length of the base end portion 3a2 of the main body portion 3a was 3 mm, the diameter φ2 of the base end portion 3a2 was 4 mm, and the radius R2 of the base end portion 3a2 was 2 mm. Moreover, the helical angle β of the helical groove 3b was 180°. Furthermore, the length of the neck portion 3c was 2 mm, and the diameter of the neck portion 3c was 3 mm. Moreover, the length of the second shaft portion 4 was 10 mm, and the diameter of the second shaft portion 4 was 3 mm. Furthermore, the length (height) of the head portion 2 in the axial direction was 3 mm, the tilt angle θ1 of the head portion 2 was 20°, and the thickness of the peripheral edge portion 2b was 1 mm.

The first to-be-fastened member 40 was a quadrilateral-prism-shaped block member that had a square cross section with a vertical length of 12 mm and a horizontal length of 12 mm and that had a height of 35 mm. The taper angle θ2 (FIG. 6) of the opening portion 42 was 105°, and the height (depth) (FIG. 6) of the opening portion 42 was 1 mm. The depth of the hole portion 43 was 15 mm. The depth of the prepared hole 41 was 16 mm. ADC12 was used as the material of the first to-be-fastened member 40.

The second to-be-fastened member 50 was a plate member with a vertical length of 80 mm, a horizontal length of 30 mm, and a thickness of 2.0 mm. A5052-H34 was used as the material of the second to-be-fastened member 50.

In the riveting apparatus 10, the air pressure generated by the air compressor 11 was set to 0.75 MPa. Moreover, the driving speed by the riveting apparatus 10 was set to 70 m/sec.

The weight of the auxiliary member 21 was about 14.4 g.

In the experiment data 1, experiment was performed with the opening diameter φ1 (FIG. 6), the taper angle θ3 (FIG. 6), and a one-side taper angle (value that is a half of the taper angle θ3) of the hole portion 43 in the prepared hole 41 set to various values in the examples and the comparative examples.

In the experiment data 1, for the "interference", there were calculated the "diameter (mm) of the rivet 1a at a position where the interference was maximum" and the "diameter (mm) of the prepared hole at the position where the interference was maximum" in a positional relationship in a state where the rivet 1a was driven into the first to-be-fastened member 40 and the second to-be-fastened member 50. Moreover, the "contact length (mm) of the rivet 1a" and the "maximum interference (mm)" and the "maximum interference (%)" to be the maximum value of the interference were calculated.

Results of the experiment data 1 are shown in FIG. 11.

### <Examples B>

In an example B12, the opening diameter φ1 was set to 3.97 mm, the taper angle θ3 was set to 2.0°, and the one-side taper angle was set to 1.0°. The diameter of the rivet 1a at the position where the interference was maximum was 3.989 mm, the diameter of the prepared hole at the position where the interference was maximum was 3.681 mm, the maximum interference was 0.091 mm and 4.8%, and the contact length of the rivet 1a was 5.5 mm.

In an example B21, the opening diameter φ1 was set to 4.05 mm, the taper angle θ3 was set to 3.0°, and the one-side taper angle was set to 1.5°. The diameter of the rivet 1a at the position where the interference was maximum was 3.989 mm, the diameter of the prepared hole at the position where the interference was maximum was 3.681 mm, the maximum interference was 0.089 mm and 4.7%, and the contact length of the rivet 1a was 5.5 mm.

In an example B22, the experiment was performed as in the example B21 except for setting the opening diameter φ1 to 3.95 mm. The diameter of the rivet 1a at the position where the interference was maximum was 3.989 mm, the diameter of the prepared hole at the position where the interference was maximum was 3.681 mm, the maximum interference was 0.139 mm and 7.5%, and the contact length of the rivet 1a was 6.0 mm.

In an example B31, the opening diameter φ1 was set to 4.13 mm, the taper angle θ3 was set to 4.0°, and the one-side taper angle was set to 2.0°. The diameter of the rivet 1a at the position where the interference was maximum was 3.955 mm, the diameter of the prepared hole at the position where the interference was maximum was 3.781 mm, the maximum interference was 0.085 mm and 4.6%, and the contact length of the rivet 1a was 4.8 mm.

In an example B32, the experiment was performed as in the example B31 except for setting the opening diameter φ1 to 4.03 mm. The diameter of the rivet 1a at the position where the interference was maximum was 3.955 mm, the diameter of the prepared hole at the position where the interference was maximum was 3.781 mm, the maximum interference was 0.137 mm and 7.4%, and the contact length of the rivet 1a was 6.3 mm.

In an example B33, the experiment was performed as in the example B31 except for setting the opening diameter φ1 to 3.93 mm. The diameter of the rivet 1a at the position where the interference was maximum was 3.955 mm, the diameter of the prepared hole at the position where the interference was maximum was 3.781 mm, the maximum interference was 0.187 mm and 10.5%, and the contact length of the rivet 1a was 6.6 mm.

In an example B41, the opening diameter φ1 was set to 4.11 mm, the taper angle θ3 was set to 5.0°, and the one-side taper angle was set to 2.5°. The diameter of the rivet 1a at the position where the interference was maximum was 3.955 mm, the diameter of the prepared hole at the position where the interference was maximum was 3.676 mm, the maximum interference was 0.187 mm and 7.6%, and the contact length of the rivet 1a was 6.5 mm.

In an example B42, the experiment was performed as in the example B41 except for setting the opening diameter φ1 to 4.01 mm. The diameter of the rivet 1a at the position where the interference was maximum was 3.955 mm, the diameter of the prepared hole at the position where the interference was maximum was 3.577 mm, the maximum interference was 0.190 mm and 10.7%, and the contact length of the rivet 1a was 7.0 mm.

In an example B51, the opening diameter φ1 was set to 4.20 mm, the taper angle θ3 was set to 6.0°, and the one-side taper angle was set to 3.0°. The diameter of the rivet 1a at the position where the interference was maximum was 3.955 mm, the diameter of the prepared hole at the position where the interference was maximum was 3.671 mm, the maximum interference was 0.142 mm and 7.7%, and the contact length of the rivet 1a was 6.0 mm.

In an example B52, the experiment was performed as in the example B51 except for setting the opening diameter φ1 to 4.10 mm. The diameter of the rivet 1a at the position where the interference was maximum was 3.955 mm, the diameter of the prepared hole at the position where the interference was maximum was 3.571 mm, the maximum interference was 0.192 mm and 10.8%, and the contact length of the rivet 1a was 7.0 mm.

In an example B61, the opening diameter φ1 was set to 4.36 mm, the taper angle θ3 was set to 8.0°, and the one-side taper angle was set to 4.0°. The diameter of the rivet 1a at the position where the interference was maximum was 3.899 mm, the diameter of the prepared hole at the position where the interference was maximum was 3.591 mm, the maximum interference was 0.154 mm and 8.5%, and the contact length of the rivet 1a was 5.5 mm.

In an example B62, the experiment was performed as in the example B61 except for setting the opening diameter φ1 to 4.26 mm. The diameter of the rivet 1a at the position where the interference was maximum was 3.899 mm, the diameter of the prepared hole at the position where the interference was maximum was 3.571 mm, the maximum interference was 0.204 mm and 11.7%, and the contact length of the rivet 1a was 6.5 mm.

In an example B71, the opening diameter φ1 was set to 4.63 mm, the taper angle θ3 was set to 10.0°, and the one-side taper angle was set to 5.0°. The diameter of the rivet 1a at the position where the interference was maximum was 3.718 mm, the diameter of the prepared hole at the position where the interference was maximum was 3.488 mm, the maximum interference was 0.115 mm and 6.6%, and the contact length of the rivet 1a was 4.5 mm.

In an example B72, the experiment was performed as in the example B71 except for setting the opening diameter φ1 to 4.43 mm. The diameter of the rivet 1a at the position where the interference was maximum was 3.718 mm, the diameter of the prepared hole at the position where the interference was maximum was 3.388 mm, the maximum interference was 0.173 mm and 9.7%, and the contact length of the rivet 1a was 5.5 mm.

### <Comparative Examples B>

In a comparative example B11, the experiment was performed as in the example B12 except for setting the opening diameter φ1 to 4.07 mm. The diameter of the rivet 1a at the position where the interference was maximum was 3.989 mm, the diameter of the prepared hole at the position where the interference was maximum was 3.681 mm, the maximum interference was 0.041 mm and 2.1%, and the contact length of the rivet 1a was 4.0 mm.

In a comparative example B43, the experiment was performed as in the example B41 except for setting the opening diameter φ1 to 3.91 mm. The diameter of the rivet 1a at the position where the interference was maximum was 3.955 mm, the diameter of the prepared hole at the position where the interference was maximum was 3.476 mm, the maximum interference was 0.240 mm and 13.8%, and the contact length of the rivet 1a was 7.3 mm.

In a comparative example B44, the experiment was performed as in the example B41 except for setting the opening diameter φ1 to 3.71 mm. The diameter of the rivet 1a at the position where the interference was maximum was 3.955 mm, the diameter of the prepared hole at the position where the interference was maximum was 3.276 mm, the maximum interference was 0.340 mm and 20.7%, and the contact length of the rivet 1a was 7.5 mm.

In a comparative example B53, the experiment was performed as in the example B51 except for setting the opening diameter φ1 to 4.00 mm. The diameter of the rivet 1a at the position where the interference was maximum was 3.955 mm, the diameter of the prepared hole at the position where the interference was maximum was 3.471 mm, the maximum interference was 0.242 mm and 13.9%, and the contact length of the rivet 1a was 7.5 mm.

In a comparative example B63, the experiment was performed as in the example B61 except for setting the opening diameter φ1 to 4.16 mm. The diameter of the rivet 1a at the position where the interference was maximum was 3.899 mm, the diameter of the prepared hole at the position where the interference was maximum was 3.781 mm, the maximum interference was 0.254 mm and 14.9%, and the contact length of the rivet 1a was 7.5 mm.

In a comparative example B73, the experiment was performed as in the example B71 except for setting the opening diameter φ1 to 4.23 mm. The diameter of the rivet 1a at the position where the interference was maximum was 3.718 mm, the diameter of the prepared hole at the position where the interference was maximum was 3.281 mm, the maximum interference was 0.215 mm and 13.1%, and the contact length of the rivet 1a was 6.0 mm.

### <Studies>

As shown in the evaluation of each example in the experiment data 1 of FIG. 11, it is found that, in the case where the value of "maximum interference (%)" is within a range of 3 to 13%, no cracking occurs in the fastened product 60, and the fastened product 60 can have sufficient leak resistance.

Moreover, it is found that, in the case where the "contact length (mm) of the rivet 1a" is about 5 mm or more, a preferable value exceeding 2,500 N can be obtained as the tensile strength of the fastened product 60.

Moreover, it is found that, in the case where the relationship between the opening diameter φ1 of the hole portion 43 in the prepared hole 41 and the diameter φ2 of the base end portion 3a2 in the main body portion 3a is a relationship of "1.0×φ2<φ1≤1.1×cp2" and the taper angle θ3 of the hole portion 43 in the prepared hole 41 is in a range of 2 to 10°, there can be formed the prepared hole 41 having a shape that allows the prepared hole 41 to reach the desired maximum interference by coming into contact with the rivet 1a, and the evaluation result thus tends to be good.

FIG. 13 is a cross-sectional view of the fastened product 60 created in the example B42. As shown in FIG. 13, according to the present embodiment, it can be found that the first to-be-fastened member 40 and the second to-be-fastened member 50 are fastened to each other without a gap therebetween. Moreover, the first shaft portion 3 and the first to-be-fastened member 40 are coupled to each other without a gap therebetween. Furthermore, it can be found that part of the first to-be-fastened member 40 has entered the helical groove 3b of the first shaft portion 3, and the first shaft portion 3 is inserted while rotating and cutting the first to-be-fastened member 40.

### [Experiment Data 2]

In the experiment data 2, experiments were performed as in the example B42 of the experiment data 1 except for setting the helical angle β (FIG. 3) to various values in each example.

Results of the experiment data 2 are shown in FIG. 12.

### <Examples C>

The helical angle β was set to 53° in an example C11, 105° in an example C12, 180° in an example C13, 210° in the example C14, and 315° in an example C15. Note that the example B42 and the example C13 are the same data.

### <Studies>

It is found from the examples of the experiment data 2 that, in the case where the helical angle β is in the range of 60 to 360°, no cracking occurs in the fastened product 60, the fastened product 60 has sufficient leak resistance, and the tensile strength of the fastened product 60 is sufficiently high.

### Reference Signs List

- 1a: rivet
- 1b: rivet
- 2: head portion
- 2a: center portion
- 2b: peripheral edge portion
- 3: first shaft portion
- 3a1: tip end portion
- 3a2: base end portion
- 3a3: tip end
- 3b: helical groove (groove)
- 4: second shaft portion
- 5: bulging portion
- 21: auxiliary member
- 21b: inner peripheral surface (holding portion)
- 30: to-be-fastened members
- 40: first to-be-fastened member
- 40a: front surface
- 41: prepared hole
- 43: hole portion
- 50: second to-be-fastened member
- 50a: back surface
- 50b: front surface
- 60: fastened product
- φ1: opening diameter
- φ2: diameter
- θ1: tilt angle
- θ2: taper angle of opening portion
- θ3: taper angle of prepared hole
- β: helical angle

## Claims

1. A riveting method comprising:
a preparation step of laying a back surface of a second to-be-fastened member on a front surface of a first to-be-fastened member having a prepared hole; and
a riveting step of moving a metal rivet set at a position away from a front surface of the second to-be-fastened member toward a position of the prepared hole, and driving the rivet into the second to-be-fastened member and the first to-be-fastened member in this order to cause the rivet to reach an inside of the prepared hole, wherein
the prepared hole includes a hole portion having an inner wall surface with a substantially cone shape or a substantially truncated cone shape that is a tapered shape,
the rivet includes a first shaft portion with a tapered shape,
the first shaft portion includes a tip end portion whose diameter decreases toward a tip end side,
a groove is carved on an outer peripheral surface of the first shaft portion from a base end side toward the tip end side of the first shaft portion, and
regarding an interference that is a value obtained by dividing a difference between a circumferential length of the inner wall surface of the hole portion and a circumferential length of the first shaft portion at a position where the inner wall surface and the first shaft portion are in contact with each other after driving of the rivet by the circumferential length of the inner wall surface, a maximum interference that is a maximum value of the interference is 3 to 13%.

2. The riveting method according to claim 1, wherein a rivet contact length that is a length of a contact portion where the inner wall surface and the first shaft portion are in contact with each other in an axial direction of the first shaft portion is 5 mm or more.

3. The riveting method according to claim 1, wherein
the tip end portion includes a bulging portion that bulges outward beyond a cone shape formed by an imaginary bottom surface at a base end of the tip end portion and a vertex at a tip end of the tip end portion, and
the interference becomes the maximum interference in the bulging portion.

4. The riveting method according to claim 1, wherein an opening diameter of the hole portion is larger than a diameter of a base end portion of the first shaft portion.

5. The riveting method according to claim 1, wherein a relationship between an opening diameter φ1 of the hole portion and a diameter φ2 of a base end portion of the first shaft portion is 1.0×φ2<φ1≤1.1×φ2.

6. The riveting method according to claim 1, wherein a taper angle of the hole portion is 2 to 10°.

7. The riveting method according to claim 1, wherein
the rivet further includes a head portion extending from a base end of the first shaft portion,
the first shaft portion extends downward from the head portion,
the head portion includes a center portion connected to the first shaft portion and a peripheral edge portion spreading outward from the center portion, and
a diameter of the peripheral edge portion is larger than a diameter of the first shaft portion.

8. The riveting method according to claim 7, wherein the head portion has an umbrella shape in which the peripheral edge portion spreads while being tilted toward the first shaft portion side.

9. The riveting method according to claim 7, wherein a thickness of the peripheral edge portion of the head portion is 0.1 to 2.0 mm.

10. The riveting method according to claim 7, wherein a tilt angle of the head portion is 5 to 30°.

11. The riveting method according to claim 1, wherein
the groove is a helical groove formed in a helical shape on an outer surface of the first shaft portion, and
in the riveting step, the rivet set at the position away from the front surface of the second to-be-fastened member is moved toward the position of the prepared hole in a non-rotating state, and is made to reach the inside of the prepared hole by being screwed into the second to-be-fastened member and the first to-be-fastened member in this order while being rotated.

12. The riveting method according to claim 11, wherein a helical angle of the helical groove is 60 to 360°.

13. The riveting method according to claim 7, wherein
the rivet further includes a second shaft portion extending from the head portion, on the opposite side of the head portion to the first shaft portion, and
in the riveting step, an auxiliary member having a holding portion configured to hold the second shaft portion is used, and the rivet is moved toward the position of the prepared hole together with the auxiliary member with the auxiliary member holding the second shaft portion.

14. The riveting method according to claim 1, wherein the first to-be-fastened member and the second to-be-fastened member are made of aluminum or an aluminum alloy.

15. The riveting method according to claim 1, wherein the first to-be-fastened member is made of aluminum or an aluminum alloy, and the second to-be-fastened member is a plate member made of a resin.

16. The riveting method according to claim 1, wherein the first to-be-fastened member is a casted member.

17. A fastened product comprising:
a first to-be-fastened member having a prepared hole;
a second to-be-fastened member whose back surface is laid on a front surface of the first to-be-fastened member; and
a metal rivet driven into the second to-be-fastened member and the first to-be-fastened member in this order to reach an inside of the prepared hole, wherein
the prepared hole includes a hole portion having an inner wall surface with a substantially cone shape or a substantially truncated cone shape that is a tapered shape,
the rivet includes a first shaft portion with a tapered shape,
the first shaft portion includes a tip end portion whose diameter decreases toward a tip end side,
a groove is carved on an outer peripheral surface of the first shaft portion from a base end side toward the tip end side of the first shaft portion, and
regarding an interference that is a value obtained by dividing a difference between a circumferential length of the inner wall surface of the hole portion and a circumferential length of the first shaft portion at a position where the inner wall surface and the first shaft portion are in contact with each other after driving of the rivet by the circumferential length of the inner wall surface, a maximum interference that is a maximum value of the interference is 3 to 13%.
